# EUROPEAN PATENT APPLICATION

(11) **EP 4 053 590 A2**
(43) Date of publication of application: **07.09.2022**
(21) Application number: 22173794.3
(22) Date of filing: 17.05.2022
(51) Int. Cl.: G01S 7/481, G01S 17/931, G08G 1/04

(54) **ROADSIDE SENSING APPARATUS AND INTELLIGENT TRANSPORTATION SYSTEM**

(30) Priority: 31.05.2021 CN 202110602160; 15.07.2021 CN 202110802502
(71) Applicant: Apollo Intelligent Connectivity (Beijing) Technology Co., Ltd., Beijing 100176 (CN)
(72) Inventor: ZHANG, Qingshun, Beijing, 100176 (CN)
(74) Representative: Viering, Jentschura & Partner mbB Patent- und Rechtsanwälte

(57) **Abstract**

Disclosed are a roadside sensing apparatus (1) and an intelligent transportation system. The disclosure is in the technical field of sensing apparatus. The roadside sensing apparatus includes: a base (10); a scanning device (20), e.g. a lidar, including a main scanning unit (21) and a sub-scanning unit (22), the main scanning unit (21) is located above the sub-scanning unit (22), a lower boundary line of a first scanning field of view of the main scanning unit (21) coincides or intersects with an upper boundary line of a second scanning field of view of the sub-scanning unit (22); and a driving device (30), provided on the base (10), to drive the scanning device (20) to rotate in a horizontal direction. A control device (11) is provided inside the base (10), and the control device (11) communicates with the driving device (30), to control the driving device (30) to drive the scanning device (20) to rotate. The driving device (30) includes a drive motor (31) and a transmission shaft (32), an output shaft of the drive motor (31) is drivingly connected to the transmission shaft (32), and the transmission shaft (32) is fixedly connected to the scanning device (20). An omnidirectional detection of the target environment without any blind area can be realized, the integration degree of the roadside sensing apparatus is improved, and the detection accuracy of the target environment can be higher.

## Description

### TECHNICAL FIELD

The present disclosure relates to the technical field of intelligent transportation, and in particular to the technical field of sensing apparatuses.

### BACKGROUND

In the related art, the sensing apparatus located on the roadside of the intelligent transportation system usually adopts a structure of a combination of multiple sensing apparatuses, such as a combination of a surveillance camera and a fisheye camera, or a combination of a radar sensor and a fisheye camera, to achieve a comprehensive detection of the roadside environment.

Among them, for the combination of the surveillance camera and the fisheye camera, only pure visual monitoring can be achieved, while the precise measurement requirements of parameters such as the distance and speed of a target object within the detection range cannot be met, and there is a problem of poor use effect in the environments such as a foggy day and a night. For the combination of the radar sensor and the fisheye camera, due to different forms of data output by the radar sensor and the fisheye camera, the final data fusion effect is poor and the data error is large, and hence the precise measurement requirements of parameters such as the distance and speed of the target object within the detection range also cannot be met.

### SUMMARY

The present disclosure provides a roadside sensing apparatus and an intelligent transportation system.

According to an aspect of the present disclosure, there is provided a roadside sensing apparatus, including:
a base;
a scanning device, comprising a main scanning unit and a sub-scanning unit, the main scanning unit is located above the sub-scanning unit, a lower boundary line of a first scanning field of view of the main scanning unit coincides or intersects with an upper boundary line of a second scanning field of view of the sub-scanning unit; and
a driving device, provided on the base, to drive the scanning device to rotate in a horizontal direction.

According to another aspect of the present disclosure, there is provided an intelligent transportation system, including:
the roadside sensing apparatus according to the above embodiment of the present disclosure; and
a roadside computation unit, configured for receiving structured data from the roadside sensing apparatus and performing data computation processing on the structured data.

According to the roadside sensing apparatus of the embodiment of the present disclosure, the sub-scanning area corresponding to the sub-scanning unit can be used as the gap-filling area for the main scanning area corresponding to the main scanning unit, eliminating the blind area between the main scanning area and the sub-scanning area, and meeting the requirements of omnidirectional detection without blind areas of the target environment. Secondly, by integrating the main scanning unit and the sub-scanning unit, it is conducive to the realization of a high degree of system integration of the roadside sensing apparatus, which can realize integrated installation for multiple scanning units, reducing the system integration difficulty and engineering difficulty of multiple scanning units. Thirdly, the main scanning unit and the sub-scanning unit can use various scanning devices, for example, both the main scanning unit and the sub-scanning unit can use a lidar. Thus, this solves the technical problems that the roadside sensing apparatus in the related art cannot achieve omnidirectional detection without blind areas and has low detection accuracy and poor integration, and improves the detection accuracy of the gap-filling area, thereby improving the recognition accuracy of the back-end equipment, which is conducive to the realization of omnidirectional high-precision detection without blind areas.

It should be understood that the content described in this section is neither intended to limit the key or important features of the embodiments of the present disclosure, nor intended to limit the scope of the present disclosure. Other features of the present disclosure will be readily understood through the following description.

### BRIEF DESCRIPTION OF THE DRAWINGS

The above and other features, advantages and aspects of various embodiments of the present disclosure will become more apparent when taken in conjunction with the accompanying drawings and with reference to the following detailed description. The same or similar reference numerals refer to the same or similar elements throughout the drawings, wherein:
FIG. 1 shows a structural schematic diagram of a roadside sensing apparatus according to an embodiment of the present disclosure;
FIG. 2 shows a schematic diagram of the distribution of laser beams of a scanning device of a roadside sensing apparatus according to an embodiment of the present disclosure.

Description of reference numerals:
roadside sensing apparatus 1;
base 10; control device 11;
scanning device 20; main scanning unit 21; sub-scanning unit 22;
driving device 30; drive motor 31; transmission shaft 32.

### DETAILED DESCRIPTION

Exemplary embodiments of the present disclosure are described below in combination with the drawings, including various details of the embodiments of the present disclosure to facilitate understanding, which should be considered as exemplary only. Thus, those of ordinary skill in the art should realize that various changes and modifications can be made to the embodiments described here without departing from the scope and spirit of the present disclosure. Likewise, descriptions of well-known functions and structures are omitted in the following description for clarity and conciseness.

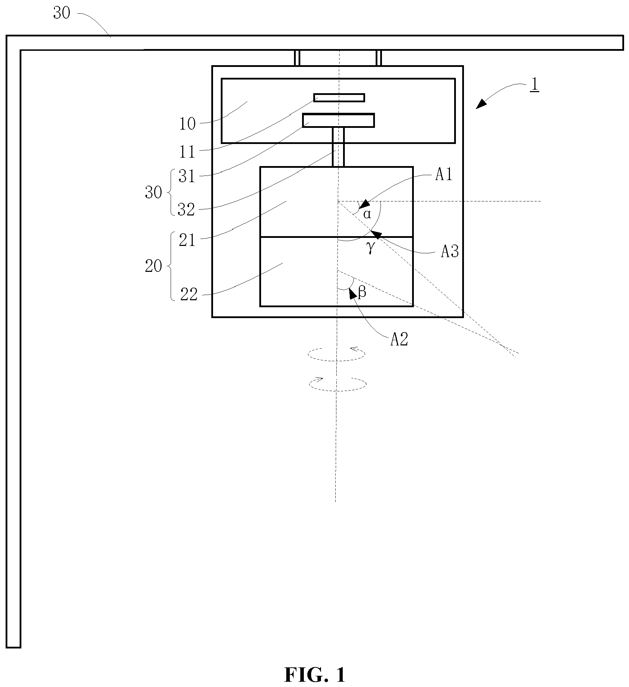

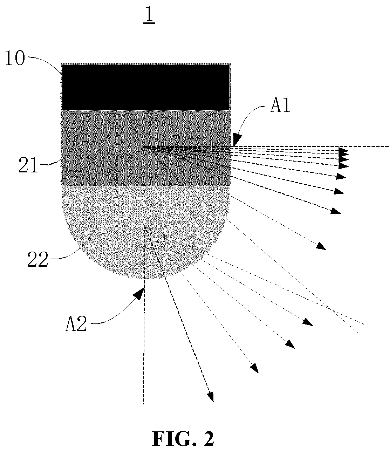

A roadside sensing apparatus 1 according to an embodiment of the present disclosure will be described below with reference to FIGS. 1 and 2.

As shown in FIG. 1, the roadside sensing apparatus 1 according to the embodiment of the present disclosure includes a base 10, a scanning device 20 and a driving device 30.

Specifically, the scanning device 20 includes a main scanning unit 21 and a sub-scanning unit 22, the main scanning unit 21 is located above the sub-scanning unit 22, a lower boundary line of a first scanning field of view of the main scanning unit 21 coincides or intersects with an upper boundary line of a second scanning field of view of the sub-scanning unit 22. The driving device 30 is provided on the base 10, the driving device 30 is drivingly connected to the scanning device 20, to drive the scanning device to rotate in a horizontal direction.

In an example, the main scanning unit 21 and the sub-scanning unit 22 may use a lidar respectively. Specifically, the lidar includes a photoelectric detection module and a data preprocessing module. The photoelectric detection module includes a photoelectric detection element and a digital-to-analog converter. The photoelectric detection element is configured to detect the target environment and generate a digital optical signal. The digital-to-analog conversion module is configured to receive the optical signal from the photoelectric detection element and convert the optical signal into an analog signal. The data preprocessing module is configured to receive the analog signal from the digital-to-analog conversion module and preprocessing the analog signal to generate scan data. The data processing device of the roadside sensing apparatus 1 receives scan data from the main scanning unit 21 and the sub-scanning unit 22 respectively, and obtains structured data through corresponding data processing.

In another example, the main scanning unit 21 and the sub-scanning unit 22 may also use a photoelectric detection module respectively. The data processing device of the roadside sensing apparatus 1 receives an analog signal from the main scanning unit 21 and the sub-scanning unit 22 respectively, and obtains structured data through corresponding data processing.

It can be understood that the scanning device 20 is driven by the driving device 30 to rotate clockwise or counterclockwise in the horizontal direction, so that the field angles of the first scanning field of view of the main scanning unit 21 and the second scanning field of view of the sub-scanning unit 22 in the horizontal direction both are 360 degrees, so that the omnidirectional scanning of the scanning device 20 in the horizontal direction is realized. It can be understood that the main scanning area, corresponding to the first scanning field of view, in the target environment is annular, and the sub-scanning area, corresponding to the second scanning field of view, in the target environment is annular or circular.

It should be noted that the first scanning field of view of the main scanning unit 21 may be a vertical scanning field of view of the main scanning unit 21 in the vertical direction, and the second scanning field of view of the sub-scanning unit 22 may be a vertical scanning field of view of the sub-scanning unit 22 in the vertical direction.

Illustratively, the main scanning unit 21 and the sub-scanning unit 22 are arranged in the vertical direction, and the main scanning unit 21 is located above the sub-scanning unit 22. The first scanning field of view of the main scanning unit 21 may be inclined downward at a small angle relative to the horizontal direction, and the second scanning field of view of the sub-scanning unit 22 may be inclined downward at a large angle relative to the horizontal direction. The lower boundary line of the first scanning field of view coincides or intersects with the upper boundary line of the second scanning field of view, so that the main scanning area corresponding to the main scanning unit 21 meets or partially overlaps with the sub-scanning area corresponding to the sub-scanning unit 22, so that the overall scanning area of the scanning device 20 forms a complete ring or circle, thereby eliminating the blind area between the main scanning area of the main scanning unit 21 and the sub-scanning area of the sub-scanning unit 22.

In addition, the embodiments of the present disclosure do not specifically limit the arrangement of the base 10 and the scanning device 20. For example, the scanning device 20 may be disposed below the base 10, and for another example, the scanning device 20 may also be disposed above the base 10.

Preferably, in order to prevent the base 10 from interfering with the scanning field of view of the scanning device 20, referring to the example shown in FIG. 1, the scanning device 20 may be disposed below the base 10. Herein, the base 10 can be arranged on a support rod on the roadside, so that the roadside sensing apparatus 1 has a certain height relative to the ground. For example, the height of the base 10 relative to the ground can be set between 6 meters and 7 meters, so that the scanning device 20 forms a certain scanning area and scanning distance in the target environment.

In a specific application example, the roadside sensing apparatus 1 of the embodiment of the present disclosure can be applied to an intelligent transportation system and is arranged on the roadside, and the roadside sensing apparatus 1 is used to detect the target environment on the roadside and generate corresponding sensing data. Herein, the sensing data can be structured data, which can represent a distance, an orientation, a speed, an attitude, a shape and other information of a target object in a target environment. After generating the sensing data, the roadside sensing apparatus 1 sends the same to an edge computation unit on the roadside, and the edge computation unit implements other processing procedures such as tracking, identifying, and path planning of the target object according to the sensing data.

It can be understood that, for the roadside sensing apparatus 1 in the related art that adopts a combination of a surveillance camera and a fisheye camera, the fisheye camera can independently achieve a wide range of surveillance, and the monitoring area of the fisheye camera can be used as a gap-filling area for the monitoring area of the surveillance camera. However, the image acquired by the fisheye camera has large distortion and low precision, which cannot meet the precise measurement requirements of parameters such as a distance and a speed of a target object in the full range. For the roadside sensing apparatus 1 in the related art that adopts a combination of a radar sensor and a fisheye camera, although omnidirectional monitoring without blind areas can also be realized, due to different forms of data output by the radar sensor and the fisheye camera, the data fusion effect is relatively poor, resulting in large errors in the final data. Therefore, the roadside sensing apparatus 1 in this way cannot meet the precise measurement requirements of parameters such as the distance and speed of the target object in the full range. In addition, the above two forms of roadside sensing apparatuses cannot also meet the detection requirements in working conditions such as a night or a fog, and are less practical.

According to the roadside sensing apparatus 1 of the embodiment of the present disclosure, by setting the scanning device 20 to include a main scanning unit 21 and a sub-scanning unit 22, the main scanning unit 21 is located above the sub-scanning unit 22, and the lower boundary line of the first scanning field of view of the main scanning unit 21 coincides or intersects with the upper boundary line of the second scanning field of view, and the scanning device 20 is driven by the driving device 30 to rotate in the horizontal direction, so that the sub-scanning area corresponding to the sub-scanning unit 22 can be used as a gap-filling area for the main scanning area corresponding to the main scanning unit 21, which eliminates the blind area between the main scanning area and the sub-scanning area, and satisfies the requirements of omnidirectional detection without blind areas of the target environment.

Secondly, by integrating the main scanning unit 21 and the sub-scanning unit 22, the main scanning unit 21 and the sub-scanning unit 22 can be separately configured for different detection distances in the target environment, which realizes the high integration of the roadside sensing apparatus 1, and can realize the integrated installation for multiple scanning units, reduce the system integration difficulty and engineering difficulty of the roadside sensing apparatus, thereby reducing hardware costs.

Thirdly, the main scanning unit 21 and the sub-scanning unit 22 can use various scanning devices, for example, the main scanning unit 21 and the sub-scanning unit 22 both can use a lidar. Thus, this solves the technical problems that the roadside sensing apparatus 1 in the related art cannot achieve omnidirectional detection without blind areas and has low detection accuracy and poor integration, can meet the detection requirements in different working conditions and improves the detection accuracy of the gap-filling area, thereby improving the recognition accuracy of the back-end equipment, which is conducive to the realization of omnidirectional high-precision detection without blind areas.

In one implementation, the lower boundary line of the second scanning field of view of the sub-scanning unit 22 is parallel to a vertical direction or at a negative angle with respect to the vertical direction.

Herein, the lower boundary line of the second scanning field of view of the sub-scanning unit 22 is at a negative angle with respect to the vertical direction, which can be understood that the angle between the lower boundary line of the second scanning field of view and the vertical line passing through the laser emission origin is a negative value. Herein, the angle between the upper boundary line of the second scanning field of view and the vertical line passing through the laser emission origin is a positive value.

It can be understood that, by setting the lower boundary line of the second scanning field of view to be parallel to the vertical direction or at a negative angle with respect to the vertical direction, during the rotation of the sub-scanning unit 22 in the horizontal direction, the sub-scanning area formed by the sub-scanning field of view corresponding to the sub-scanning unit 22 in the target environment is circular, that is, there is no blind area, which cannot be detected, in the sub-scanning area, so that there is no detection blind area in the overall scanning area corresponding to the scanning device 20, realizing the detection requirements of the roadside sensing apparatus 1 without any blind area in all directions.

Preferably, in order to avoid repeated scanning in the sub-scanning area corresponding to the sub-scanning unit 22, the lower boundary line of the second scanning field of view is set parallel to the vertical direction, that is, the lower boundary line of the second scanning field of view coincides with the vertical line passing through the laser emission origin. Therefore, while ensuring the detection requirements of the roadside sensing apparatus 1 without any blind area in all directions, the waste of the beams of the sub-scanning unit 22 in the overlapping area can be avoided, and the utilization rate of the scanning performance of the sub-scanning unit 22 can be improved.

In one implementation, a field angle γ of an overall scanning field of view formed by the first scanning field of view and the second scanning field of view is 80 degrees to 90 degrees.

It can be understood that the upper boundary line of the overall scanning field of view formed by the first scanning field of view and the second scanning field of view is the upper boundary line of the first scanning field of view, the lower boundary line of the overall scanning field of view is the lower boundary line of the second scanning field of view, the field angle γ corresponding to the overall scanning field of view is the included angle between the upper boundary line of the first scanning field of view and the lower boundary line of the second scanning field of view, and the field angle γ of the overall scanning field of view is greater than or equal to 80 degrees and less than or equal to 90 degrees. It can be understood that, in a case where the field angle γ of the scanning field of view is less than 80 degrees, the overall scanning distance corresponding to the overall scanning field of view of the scanning device is small, which cannot meet the long-distance detection requirements. Therefore, it is necessary to set the field angle γ to be greater than or equal to 80 degrees.

In a specific example, the height of the roadside sensing apparatus 1 relative to the ground of the target environment may be 6.5 meters, and the field angle γ of the overall scanning field of view formed by the first scanning field of view and the second scanning field of view may be 86.9 meters. Therefore, the overall scanning area corresponding to the overall scanning field of view is a circular area with the roadside sensing apparatus 1 as the center and a radius of 120 meters, that is, the detection distance of the roadside sensing apparatus 1 in the target environment is 120 meters.

It should be noted that the setting height of the roadside sensing apparatus 1 and the field angle of the overall scanning field of view can be specifically set according to actual detection requirements, and the above is only an exemplary description.

Through the above implementations, the roadside sensing apparatus 1 can be provided with a relatively long detection distance, so as to meet the requirements for sensing a wide range of roadside environment.

In one implementation, a field angle α corresponding to the first scanning field of view is 20 degrees to 30 degrees, and a field angle β corresponding to the second scanning field of view is 55 degrees to 65 degrees.

It should be noted that, the main scanning unit 21 is used for long-distance detection of the target environment, and the main scanning area has a larger range; the sub-scanning unit 22 is used for short-range detection of the target environment, and the sub-scanning area is small. In order to ensure the performance consistency within the scanning range of the scanning device 20, the number of laser beams of the main scanning unit 21 is much larger than that of the sub-scanning unit 22, and the equipment integration requirement of the main scanning unit 21 is also much higher than that of the sub-scanning unit 22.

By setting the field angle α to be greater than or equal to 20 degrees and less than or equal to 30 degrees and setting the field angle β to be greater than or equal to 55 degrees and less than or equal to 65 degrees, on the basis of satisfying the long-distance and large-scale detection of the main scanning unit 21, the number of laser beams of the main scanning unit 21 can be appropriately reduced, thereby reducing the hardware cost and processing difficulty of the main scanning unit 21, and further reducing the overall processing difficulty and hardware cost of the roadside sensing apparatus 1.

In one implementation, a density of laser beams of the scanning device increases gradually in a direction toward the upper boundary line of the first scanning field of view.

Illustratively, as shown in FIG. 2, the density of laser beams in the first scanning field of view increases gradually in the direction from the lower boundary line to the upper boundary line, and the density of laser beams in the second scanning field of view increases gradually in the direction from the lower boundary line to the upper boundary line. Herein, for the overlapping area of the first scanning field of view and the second scanning field of view, the density of laser beams of the first scanning field of view in the overlapping area is approximately same as that of the second scanning field of view in the overlapping area.

In addition, the number of equivalent laser beams of the overall scanning field of view corresponding to the scanning device 20 may be 300.

It can be understood that the larger the angle of the emission direction of the laser beam within the overall scanning field of view relative to the lower boundary line, the longer the projection distance of the laser beam in the target environment.

Therefore, by setting the density of the laser beams within the overall scanning field of view to increase gradually in the direction from bottom to top, the uniform distribution, in the radial direction, of the laser beams within the overall scanning range corresponding to the overall scanning field of view can be ensured, so as to ensure the overall consistency of the detection performance of the scanning device 20, especially for a target object at a long distance, higher detection accuracy still can be ensured.

In one implementation, the driving device 30 includes a drive motor 31 and a transmission shaft 32, an output shaft of the drive motor 31 is drivingly connected to the transmission shaft 32, and the transmission shaft 32 is fixedly connected to the scanning device 20.

Illustratively, as shown in FIG. 1, the drive motor 31 is disposed inside the base 10, the transmission shaft 32 is drivingly connected with the output shaft of the drive motor 31, and the transmission shaft 32 extends downward from the interior of the base 10 out of the base 10. The main scanning unit 21 and the sub-scanning unit 22 are integrally arranged, and the transmission shaft 32 is fixedly connected with the main scanning unit 21. Therefore, the transmission shaft 32 is driven to rotate by the drive motor 31, thereby driving the main scanning unit 21 and the sub-scanning unit 22 to rotate synchronously.

Herein, the transmission shaft 32 may be arranged along the vertical direction, so that the rotation axis of the scanning device 20 is arranged parallel to the vertical direction.

In addition, the rotational frequency of the driving device 30 for driving the scanning device 20 may be 10 Hz to 20 Hz, that is, the rotational speed of the scanning device 20 is 600 r/min to 1200 r/min.

Preferably, the rotational frequency of the driving device 30 for driving the scanning device 20 may be 15 Hz, that is, the rotational speed of the scanning device 20 is 900 r/min.

In other examples of the present disclosure, the main scanning unit 21 and the sub-scanning unit 22 may also adopt a non-integrated arrangement. For example, both ends of the transmission shaft 32 can extend to the upper and lower ends of the base 10 respectively, the main scanning unit 21 is located above the base 10 and is fixedly connected to the upper end of the transmission shaft 32, and the sub-scanning unit 22 is located below the base 10 and is fixedly connected with the lower end of the transmission shaft 32.

Through the above implementation, the omnidirectional rotation of the scanning device in the horizontal direction can be realized, the structure of the driving device 30 is simple, and the assembly of the scanning device 20 and the driving device 30 is also convenient.

In one implementation, a data processing device is provided inside the base 10, and the data processing device is configured to receive scan data of the main scanning unit 21 and the sub-scanning unit 22, and generate structured data.

Illustratively, the data processing device may be specifically configured to: receive scan data from the main scanning unit 21 and the sub-scanning unit 22 respectively, then perform normalization preprocessing on a plurality of scan data respectively to obtain a plurality of preprocessed data, and finally perform data fusion processing and structured feature extraction processing on the plurality of preprocessed data to generate structured data.

Herein, the structured data generated by the data processing device has a certain physical meaning and can be used to represent certain semantic information. After the structured data is output to a roadside computation unit, the roadside computation unit can realize predictive perception, path planning and early warning of the target object and other functions in the target environment based on the structured data.

Through the above implementation, by disposing the data processing device in the base 10 to process the scan data output by the scanning device 20 and generate the structured data, the base 10 can have a certain AI computing power. Compared with the roadside sensing apparatus 1 in the related art transmitting the scan data to the roadside computation unit to perform data processing, the roadside sensing apparatus 1 in the embodiment of the present disclosure can reduce the calculation amount and performance requirements of the roadside computation unit, so that the data processing efficiency of the roadside computation unit is improved and the equipment cost of the roadside computation unit is reduced.

In one implementation, a control device 11 is provided inside the base 10, and the control device 11 communicates with the driving device 30, to control the driving device 30 to drive the scanning device 20 to rotate. Herein, the communication method between the control device 11 and the driving device 30 may be electrical communication or wireless communication.

Illustratively, the control device may also control the rotational speed of the driving device to adjust the scanning frequency of the scanning device in the circumferential direction, so as to improve the applicable range of the roadside sensing apparatus.

According to the above implementation, by integrating the control device 11 inside the base 10, the control device 11 is used to send a driving signal to the driving device 30, to control the driving device 30 to be turned on or off, so as to control the scanning device 20 to rotate or rest in the horizontal direction, thereby further improving the integration of the roadside sensing apparatus.

In one implementation, the control device 11 communicates with the scanning device 20, to control the scanning device 20 to be turned on or off according to a rotation angle of the scanning device 20. Herein, the communication method between the control device 11 and the scanning device 20 may be electrical communication or wireless communication.

Illustratively, during the rotation of one round of the scanning device 20, if only the target area in the target environment needs to be detected, the main scanning unit 21 and/or the sub-scanning unit 22 are/is controlled to be turned on when the main scanning unit 21 and the sub-scanning unit 22 are rotated into the angle range of the horizontal field of view corresponding to the target area, and the main scanning unit 21 and/or the sub-scanning unit 22 are/is controlled to be turned off when being rotated into another area of the target environment. Herein, in a case where the target area is only located in the main scanning area corresponding to the main scanning unit 21, only the main scanning unit 21 is controlled to be turned on when being rotated into the angle range of the corresponding horizontal field of view. In a case where the target area is only located in the sub-scanning area corresponding to the sub-scanning unit 22, only the sub-scanning unit 22 is controlled to be turned on when being rotated into the angle range of the corresponding horizontal field of view. In a case where the target area is located in both the main scanning area and the sub-scanning area, the main scanning unit 21 and the sub-scanning unit 22 are controlled to be turned on when being rotated into the angle range of the corresponding horizontal field of view.

In a specific example, in the target environment of the intersection applied to the road test, the target area may be a road and areas on both sides of the road, and the scanning device 20 does not need to be turned on in other areas. Specifically, when the scanning device 20 is rotated into the angle range of the horizontal field of view corresponding to the target area, the main scanning unit 21 and/or the sub-scanning unit 22 are/is controlled to be turned on. When the scanning device 20 is rotated into the angle range of the horizontal field of view corresponding to the other areas, the main scanning unit 21 and the sub-scanning unit 22 are controlled to be turned off.

Through the above implementation, the scanning device 20 can be controlled to be turned on or off for a specific area in the target environment, so that on the basis of satisfying the detection requirements for the specific area, there is no need to detect other areas, so as to reduce operating costs of the roadside sensing apparatus 1.

According to another aspect of the embodiments of the present disclosure, an intelligent transportation system is also provided. The intelligent transportation system includes the roadside sensing apparatus 1 according to the above-mentioned embodiments of the present disclosure and a roadside computation unit. The roadside computation unit is configured for receiving structured data from the roadside sensing apparatus 1 and performing data computation processing on the structured data.

Illustratively, the roadside computation unit may be an edge computation unit, which is configured to receive the structured data sent by the roadside sensing apparatus 1, and perform data computation processing on the structured data, to obtain relevant information about the target object in the target environment, so as to realize predictive perception, path planning and early warning of the target object and other functions.

Further, the intelligent transportation system may also include a cloud server and a vehicle-end server, and any two of the roadside computation unit, the cloud server and the vehicle-end server may conduct information exchange.

The intelligent transportation system according to the embodiment of the present disclosure reduces the deployment cost and hardware cost of the intelligent transportation system by utilizing the roadside sensing apparatus 1 according to the above-mentioned embodiment of the present disclosure, and realizes a large range of high-precision detection without any blind area, of the roadside target environment, which ensures the efficiency and accuracy of tracking, recognition and path planning of the target object and other functions.

In the description of this specification, it is to be appreciated that the orientation or positional relationships indicated by the terms "central", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential", etc. are based on orientation or positional relationships shown based on the drawings, and they are only for the convenience of describing the present disclosure and simplifying the description, rather than indicating or implying that the apparatus or element must have a specific orientation, or must be constructed and operated in a specific orientation, and therefore they shall not be understood as a limitation to the present disclosure.

In addition, the terms "first" and "second" are only used for descriptive purposes, and are not to be construed as indicating or suggesting relative importance or implicitly indicating the number of indicated technical features. Thus, the features defined with "first" and "second" may explicitly or implicitly include one or more of these features. In the description of the present disclosure, "a plurality of" means two or more, unless otherwise expressively and specifically defined.

In the present disclosure, unless otherwise expressively specified or defined, the terms "mount", "link", "connect", "fix", etc. should be understood in the broad senses, for example, may be a fixed connection, a detachable connection or integration; may be a mechanical connection, an electrical connection or communication; and may be a direction connection, an indirect connection through an intermediate medium, or internal communication between two elements or an interaction therebetween. For those of ordinary skill in the art, the specific meanings of the above terms in the present disclosure may be understood according to specific circumstances.

In the present disclosure, unless otherwise expressively specified or defined, a first feature being "on" or "under" a second feature may indicate a direct contact between the first feature and the second feature, or an indirect contact therebetween via another feature. Furthermore, the first feature being "on", "above", or "over" the second feature may indicate that the first feature is directly or obliquely above the second feature, or merely indicate that the level of the first feature is higher than that of the second feature. The first feature being "under", "below", or "beneath" the second feature may indicate that the first feature is directly or obliquely below the second feature, or merely indicate that the level of the first feature is lower than that of the second feature.

The above disclosure provides many different implementations or examples for implementing different structures of the present disclosure. In order to simplify the disclosure of the present disclosure, components and arrangements of specific examples have been described above. Of course, they are only examples and are not intended to limit the present disclosure. In addition, the present disclosure may repeat reference numerals and/or reference letters in different examples, and this repetition is for the purpose of simplification and clarity, and itself does not indicate the relationship between the various implementations and/or arrangements discussed.

The above implementations are not to be construed as limiting the scope of the present disclosure. It will be apparent to those skilled in the art that various modifications, combinations, sub-combinations and substitutions are possible, depending on design requirements and other factors. Any modifications, equivalent substitutions and improvements, and the like within the spirit and principle of the present disclosure are intended to be included within the scope of the present disclosure.

## Claims

1. A roadside sensing apparatus (1), comprising:
a base (10);
a scanning device (20), comprising a main scanning unit (21) and a sub-scanning unit (22), wherein the main scanning unit (21) is located above the sub-scanning unit (22), a lower boundary line of a first scanning field of view of the main scanning unit (21) coincides or intersects with an upper boundary line of a second scanning field of view of the sub-scanning unit (22); and
a driving device (30), provided on the base (10), to drive the scanning device (20) to rotate in a horizontal direction.

2. The roadside sensing apparatus (1) of claim 1, wherein a lower boundary line of the second scanning field of view of the sub-scanning unit (22) is parallel to a vertical direction or at a negative angle with respect to the vertical direction.

3. The roadside sensing apparatus (1) of claim 1 or 2, wherein a field angle of an overall scanning field of view formed by the first scanning field of view and the second scanning field of view is 80 degrees to 90 degrees.

4. The roadside sensing apparatus (1) of claim 3, wherein a field angle of the first scanning field of view is 20 degrees to 30 degrees; and a field angle of the second scanning field of view is 55 degrees to 65 degrees.

5. The roadside sensing apparatus (1) of any one of claims 1 to 4, wherein a density of laser beams of the scanning device (20) increases gradually in a direction toward an upper boundary line of the first scanning field of view.

6. The roadside sensing apparatus (1) of any one of claims 1 to 5, wherein the driving device (30) comprises a drive motor (31) and a transmission shaft (32), an output shaft of the drive motor (31) is drivingly connected to the transmission shaft (32), and the transmission shaft (32) is fixedly connected to the scanning device (20).

7. The roadside sensing apparatus (1) of any one of claims 1 to 6, wherein a data processing device is provided inside the base (10), and the data processing device is configured to receive scan data of the main scanning unit (21) and the sub-scanning unit (22), and generate structured data.

8. The roadside sensing apparatus (1) of any one of claims 1 to 7, wherein a control device (11) is provided inside the base (10), and the control device (11) communicates with the driving device (30), to control the driving device (30) to drive the scanning device (20) to rotate.

9. The roadside sensing apparatus (1) of claim 8, wherein the control device (11) communicates with the scanning device (20), to control the scanning device (20) to be turned on or off according to a rotation angle of the scanning device (20).

10. An intelligent transportation system, comprising:
the roadside sensing apparatus (1) of any one of claims 1 to 9; and
a roadside computation unit, in communication with the roadside sensing apparatus.
